# EUROPEAN PATENT SPECIFICATION

(11) **EP 1 518 227 B1**
(45) Date of publication and mention of the grant of the patent: **04.09.2013**
(21) Application number: 03736356.1
(22) Date of filing: 01.07.2003
(51) Int. Cl.: G11B 7/007, G11B 20/00, G11B 7/005

(54) **HIGH-DENSITY OPTICAL DISC AND METHOD FOR RESTRICTING PLAYBACK OF THE HIGH-DENSITY OPTICAL DISC IN OPTICAL DISC APPARATUS**
HOCHDICHTER OPTISCHER DATENTRÄGER UND VERFAHREN ZUM EINSCHRÄNKEN DES ABSPIELENS DES HOCHDICHTEN OPTISCHEN DATENTRÄGERS IN EINER OPTISCHEN DATENTRÄGERVORRICHTUNG
DISQUE OPTIQUE A HAUTE DENSITE ET PROCEDE DE RESTRICTION DE LA LECTURE DE CE DISQUE DANS UN LECTEUR OPTIQUE

(30) Priority: 02.07.2002 KR 20020037947; 10.09.2002 KR 20020054762
(43) Date of publication of application: 30.03.2005
(60) Divisional application: 10012463.5
(73) Proprietor: LG Electronics, Inc., Seoul 150-010 (KR)
(72) Inventor: KIM, Jin Yong, Seongnam Kyunggi-do 463-928 (KR); SUH, Sang Woon, Seoul 137-861 (KR)
(74) Representative: Schorr, Frank Jürgen
(86) International application number: PCT/KR2003/001292
(87) International publication number: WO 2004/006231

(56) References cited:
- WO-A-01/95327
- WO-A-02/01560
- WO-A-03/094158
- WO-A1-01/11890
- JP-A- 5 266 593
- JP-A- 6 337 763
- US-A- 5 724 327

## Description

### 1. Technical Field

The present invention relates to a high-density optical disc such as BD-ROM (Blu-ray Disc ROM) which has a function for preventing unauthorized duplication of data written therein, and a method for restricting playback of illegally duplicated optical discs.

### 2. Background Art

Recently, standardization of new high-density rewritable optical discs has rapidly progressed, for example, BD-RE (Blu-Ray Disc Rewritable) , which can store a large quantity of high-quality video and audio data. As a result, products associated with such discs have also been developed. Such products are expected to be commercially available in near future.

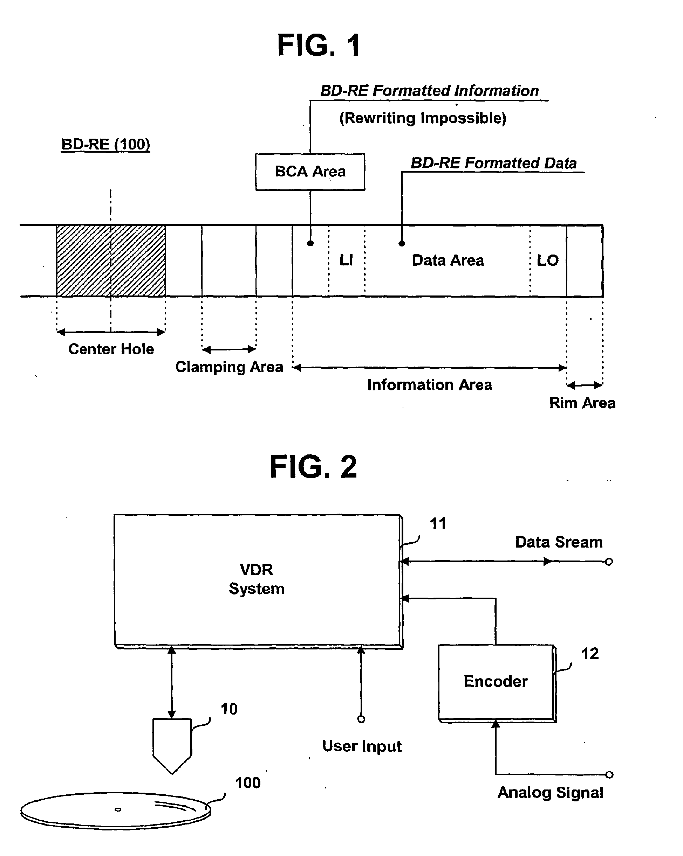

Referring to Fig. 1, the disc structure of a general BD-RE is shown. As shown in Fig. 1, the BD-RE has a center hole and a clamping area which are adapted to allow the optical disc to be loaded in position in an optical disc apparatus. The optical disc also has an information area for recording disc management information and data thereon.

A lead-in area (LI), a data area, and a lead-out area (LO) are assigned to the information area. And a burst cutting area (BCA) is assigned to the area preceding the lead-in area. The BCA, which is not a writable area, contains information modulated into a format unique to BD-RE.

Referring to Fig. 2, an example of an optical disc apparatus applicable to BD-RE is shown. As shown in Fig. 2, the optical disc apparatus includes an optical pickup 10, a video disc recorder (VDR) system 11, and an encoder 12. This optical disc apparatus performs a data recording operation for encoding and modulating data, externally inputted thereto, into a format unique to BD-RE, and then recording the modulated data on a data area assigned to the information area of the BD-RE. The optical disc apparatus also performs a data reproduction operation for reading out data streams recorded on the data area, and processing the read-out data streams to reproduce original video and audio data.

The optical disc apparatus having the above mentioned configuration can record A/V data of a movie or broadcasted program in a BD-RE 100, and subsequently reproduce the recorded A/V data from the BD-RE 100 in the form of high-quality video and audio.

Meanwhile, development and standardization of high-density read-only optical discs such as BD-ROM and write-once Blu-ray discs such as BD-R (Blu-ray Disc Recordable) have recently been progressed. However, there is no solution for effectively preventing unauthorized duplication of data streams, written on a BD-ROM, onto other optical discs such as BD-RE or BD-R. Accordingly, such a solution is strongly demanded.

### 3. Disclosure of Invention

The present invention has been made in view of the above-mentioned problems, and an object. of the invention is to provide a high-density optical disc such as BD-ROM capable of preventing unauthorized duplication of data streams, written thereon, onto a BD-RE or BD-R, and a method for restricting playback of high-density optical discs duplicated illegally in an optical disc apparatus.

Published International application WO 03/094158 A1 discloses a high-density read-only optical disc, and an optical disc apparatus and method using same. The apparatus and method record data on a lead-in area of a high-density read-only optical disc in the form of pre-pit strings.

European patent application EP 1 296 328 A1 discloses a method for recording digital data, in which the type of a loaded recording medium is identified, and a data format is selected accordingly for embedding sub-data into the data.

Published International application WO 00/45381 A1 discloses a record carrier having parallel tracks. A modulation pattern of certain variations represents a code for controlling a type of data processing. A playback device has a demodulator and a control unit for retrieving the code from the tracks.

In accordance with one aspect, the present invention provides a recording medium according to claim 1. The recording medium may be a high-density optical disc comprising: a center hole and a clamping area for allowing the optical disc to be loaded in position in an optical disc apparatus; and an information area for recording disc management information and data thereon; wherein a lead-in area, a data area, and a lead-out area are assigned to the information area, and wherein physical mark information is recorded in a selected one of a particular area assigned preceding the lead-in area, a particular region assigned to the lead-in area, and a particular region assigned to the lead-out area.

In accordance with another aspect, the present invention provides a method for restricting playback of an optical disc in an optical disc apparatus according to claim 10

The method for reproducing data may comprise : detecting and identifying disc identification information additionally recorded, in the form of physical marks, on a particular area of an optical disc; and selectively restricting a data reproduction operation, based on the identified disc identification information and a format of data read out from the optical disc.

According to further aspects, the invention provides the manufacturing method of claim 6 and the apparatus of claim 7.

### 4. Brief Description of Drawings

The accompanying drawings, which are included to provide a further understanding of the invention, illustrate the preferred embodiments of the invention, and together with the description, serve to explain the principles of the present invention.
Fig. 1 is a diagram illustrating the disc structure of a general BD-RE;
Fig. 2 is a schematic block diagram illustrating the configuration of a general BD-RE recorder;
Fig. 3 is a diagram illustrating the disc structure of a BD-ROM according to the present invention;
Fig. 4 is a schematic view illustrating physical disc identification information recorded in the form of a wobbled pit pattern in accordance with the present invention;
Fig. 5 is a diagram illustrating the disc structure of a BD-R according to the present invention;
Fig. 6 is a schematic view illustrating physical disc identification information recorded in the form of aligned pit strings in accordance with the present invention;
Fig. 7 is a table for comparing data recording formats of BD-ROM, BD-RE, BD-R, and BD-R for authoring;
Fig. 8 is a schematic block diagram illustrating the configuration of an optical disc apparatus to which a playback restricting method according to the present invention is applied; and
Figs. 9a and 9b are flow charts illustrating sequential processes of the playback restricting method carried out in the optical disc apparatus in accordance with the present invention.

Features, elements, and aspects of the invention that are referenced by the same numerals in different figures represent the same, equivalent, or similar features, elements, or aspects in accordance with one or more embodiments.

### 5. Modes for Carrying out the Invention

Hereinafter, preferred embodiments of a high-density optical disc according to the present invention, and a method for restricting playback of the high-density optical disc in accordance with the present invention will be described in detail with reference to the annexed drawings.

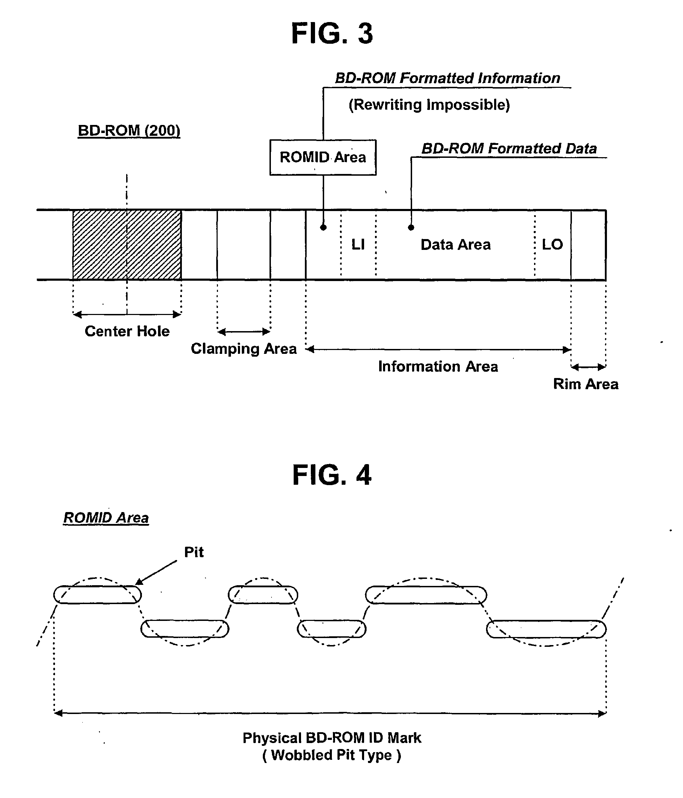

Referring to Fig. 3, the disc structure of a BD-ROM according to the present invention is shown. As shown in Fig. 3, the BD-ROM denoted by the reference numeral 200 has a center hole and a clamping area which are adapted to allow the BD-ROM 200 to be loaded in position in an optical disc apparatus. The BD-ROM 200 also has an information area on which disc management information and data have been recorded.

A lead-in area (LI), a data area, and a lead-out area (LO) are assigned to the information area. A disc identification area, for example, a BD-ROM identification (ROMID)' area, can be assigned to the area preceding the lead-in area. This ROMID area corresponds to the BCA of the BD-RE described with reference to Fig. 1. The ROMID area also can be assigned to a particular region of the lead-in or lead-out area.

The ROMID area, which is not a writable area, contains identification information representing the fact that the associated disc is of a BD-ROM type. This identification information can be recorded in a state of being modulated into a format unique to BD-ROM, that is, a physical BD-ROM ID mark.

As shown in Fig. 4, the physical BD-ROM ID mark can be recorded in the form of a wobbled pit pattern. This physical BD-ROM ID mark is detected at the initial stage of a servo operation, independent of a decoding operation for reproducing data. The wobbled pit pattern of the physical BD-ROM ID mark can represent an encryption key value used in encrypting the data to be written on the data area, that is, duplication preventing information.

On the other hand, data encoded and modulated into a format unique to BD-ROM is recorded on the data area assigned to the information area. This data is written in a mastering process in the manufacture of the associated disc.

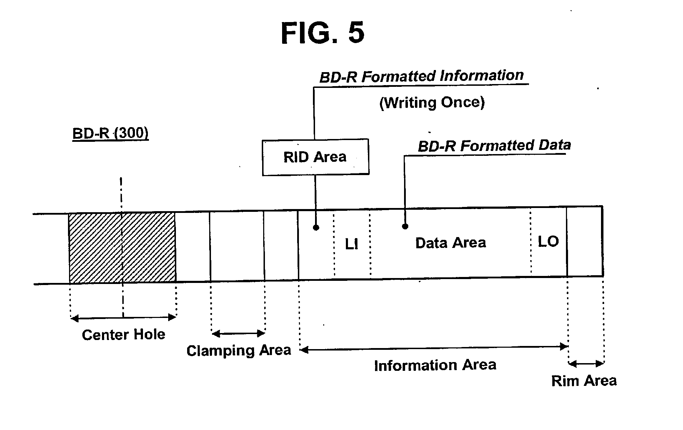

Fig. 5 illustrates the disc structure of a Blu-ray write-once, that is, BD-R, in accordance with the present invention. As shown in Fig. 5, this BD-R denoted by the reference numeral 300 has a center hole and a clamping area which are adapted to allow the BD-R 300 to be loaded in position in an optical disc apparatus. The BD-R 300 also has an information area for recording disc management information and data thereon.

A lead-in area (LI), a data area, and a lead-out area (LO) are assigned to the information area. A disc identification area, for example, a 'BD-R identification (RID)' area, also can be assigned to the area preceding the lead-in area. This RID area corresponds to the BCA of the BD-RE described with reference to Fig. 1.

The RID area, which is a writable area, contains identification information representing the fact that the associated disc is of a BD-R type. This identification information can be recorded in a state of being modulated into a format unique to BD-R, that is, a physical BD-R ID mark.

This physical mark can be recorded in the form of a wobbled pit pattern, as shown in Fig. 4. This physical BD-ROM ID mark is detected at the initial stage of a servo operation, independent of a decoding operation for reproducing data.

Meanwhile, the physical mark can be recorded in the form of a pit pattern other than the wobbled pit pattern. Using the physical mark having a pit pattern other than the wobbled pit pattern, it is possible to write data on the data area in an encrypted state, and to decrypt the encrypted data read out from the data area. This will be described in detail hereinafter.

Physical mark information, which is recorded on a particular recording area, for example, a lead-in area or a particular area (ROMID or RID area) preceding the lead-in area, in a BD-ROM or a BD-R authored for manufacture of BD-ROM, can be written to have a pattern of repeated mark/space pairs with respect to a monotone high-frequency-modulated (HFM) groove. Each mark/space pair consists of a mark and a space each having an optional length.

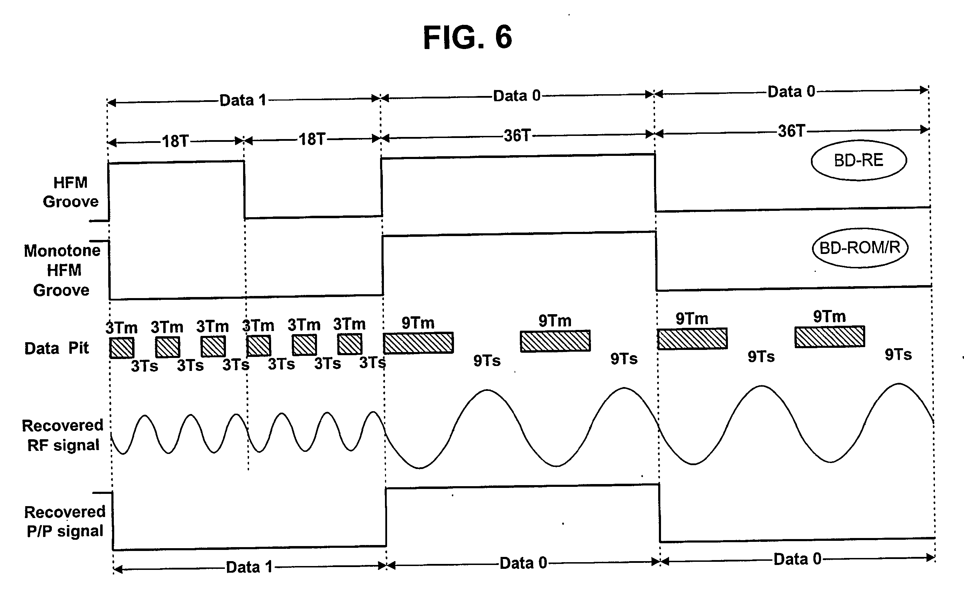

For instance, as shown in Fig. 6, the physical mark information is written with respect to a monotone HFM groove in which every recording field having a length of 36T always entirely has either a high level or a low level, irrespective of the data sequence value of the physical mark information. Where the data value of a 36T recording field is "1" , a mark/space pair consisting of a mark having a length of 3T (3Tm) and a space having a length of 3T (3Ts) is repeatedly recorded 6 times in the 36T recording field to form a pattern of 6 mark/space pairs aligned with one another. On the other hand, where the data value of the 36T recording field is "0", a mark/space pair consisting of a mark having a length of 9T (9Tm) and a space having a length of 9T (9Ts) is repeatedly recorded 2 times in the 36T recording field to form a pattern of 2 mark/space pairs aligned with one another.

Meanwhile, in the latter case, that is, where the data value of the 36T recording field is "0" , a mark having a length of 12T (12Tm), a space having a length of 12T (12Ts), and a mark having a length of 12T (12Tm) are sequentially recorded in the 36T recording field. In this case, however, there is a strong possibility of errors occurring during a tracking servo operation, because the frequencies of RF and push-pull signals get relatively lowered due to the 12T length of the marks and space. Therefore, it is preferable to record repeated mark/space pairs each consisting of a mark of 9T (9Tm) and a space of 9T (9Ts) which are capable of maintaining respective RF and push-pull signals at appropriate frequencies.

Where physical mark information is recorded to have a wobbled pit pattern, as described above with reference to Fig. 4, its wobbled pits can be formed using mastering equipment adapted to manufacture BD-ROMs. However, such wobbled pits cannot be recorded in general disc drivers, for example, BD-R drivers, because their wobbling frequency is beyond the driving frequency band of an actuator used in those BD-R drivers. As a result, it is impossible to duplicate BD-ROMs, using BD-R drivers.

In other words, in a BD-R authored for manufacture of BD-ROM, that is, a BD-R for authoring, it is possible not only to record physical mark information, but also to record essential disc information (DI) to be permanently recorded and maintained in a permanent information & control (PIC) data region included in the lead-in area of the BD-R, by applying a recording scheme in which repeated mark/space pairs each consisting of a mark and a space each having an optional length are recorded such that they are aligned with one another, with respect to a monotone HFM groove. On the other hand, recording of data in the writable area of the BD-R is achieved with respect to each typical wobbled groove.

Meanwhile, in the case of BD-ROM, wobbled pits or normal pits can be recorded in the PIC region of the BD-ROM, whereas data having the form of general pit strings is recorded in the data recording area of the BD-ROM. Accordingly, optical disc apparatuses can more easily determine the type of any optical disc, for example, BD-RE or general BD-R, by referring to pit string recorded in the form of a unique pattern in the PIC region of the optical disc.

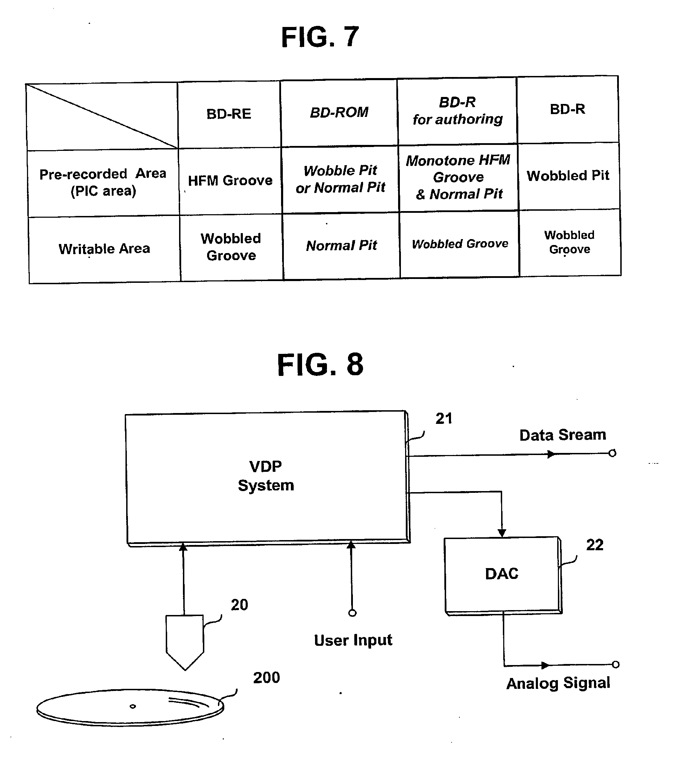

Accordingly, in the case of an optical disc apparatus adapted to play back a BD-ROM or BD-R recorded with the above described physical mark information, for example, a BD-ROM player including an optical pickup 20, a VDP system 21, and a D/A converter 22, as shown in Fig. 8, it detects and identifies the physical mark information at the initial stage of a typical servo operation thereof carried out when an optical disc is loaded, detects and identifies the unique format of data read out from the data area of the optical disc during a data reproduction operation thereof, thereby determining whether or not the data was illegally duplicated on the optical disc, so as to perform a playback restricting operation for forcibly stopping the playback of the optical disc in accordance with the result of the determination. These operations will be described in detail hereinafter.

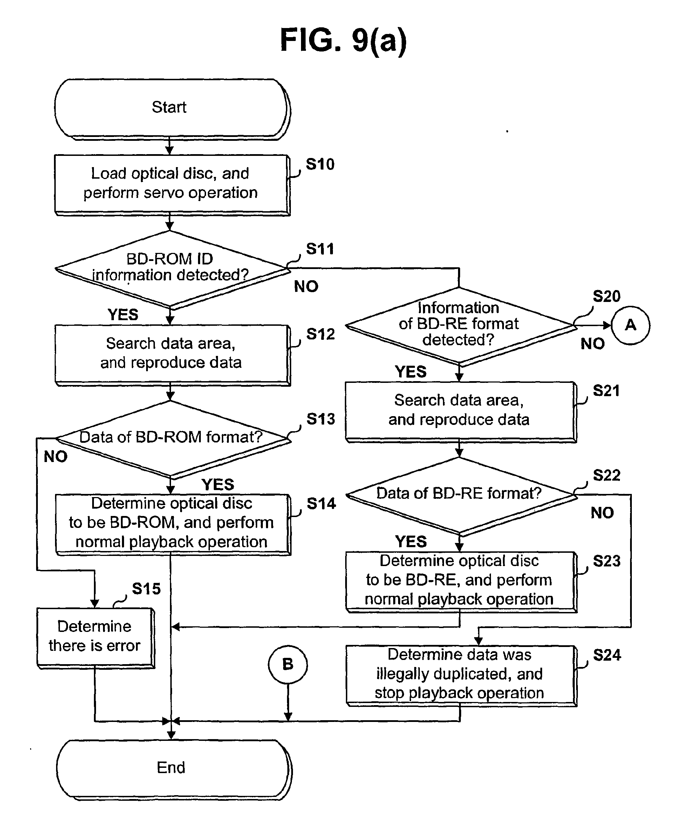

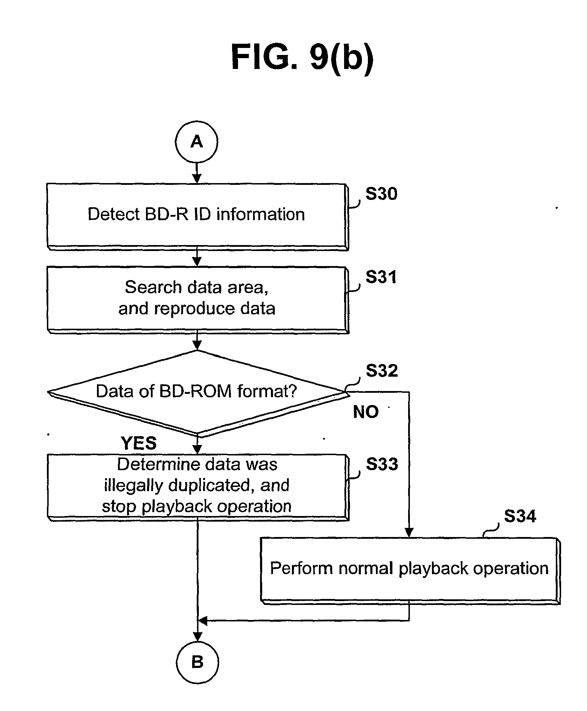

Figs. 9a and 9b are flow charts illustrating sequential processes of a method for restricting playback of an optical disc in an optical disc apparatus in accordance with the present invention.

In the optical disc apparatus shown in Fig. 8, a typical focusing and tracking servo operation is carried out by the VDP system 21 when an optical disc is loaded in the optical disc apparatus (S10), as shown in Fig. 9a.

At the initial stage of the servo operation, the VDP system 21 accesses a disc identification area preceding a lead-in area of the optical disc, to detect and identify physical mark information recorded in the disc identification area. For example, where it is determined that the physical mark information corresponds to ID information associated with BD-ROM (S11), the VDP system 21 determines that the loaded optical disc is a BD-ROM,

Subsequently, the VDP system 21 searches a data area assigned to an information area of the optical disc, and performs a data reproduction operation for reading out data recorded in the data area, and reproducing the read-out data (S12) . Where the data read out in the above described procedure has a format unique to BD-ROM, that is, the read-out data is BD-ROM format data (S13) , the VDP system 21 determines the loaded disc to be a normal BD-ROM, and continues the data reproduction (playback) operation (S14).

On the other hand, where the read-out data does not have the format unique to BD-ROM, that is, it is not BD-ROM format data, the VDP system 21 determines that there is an error in determining the kind of the optical disc (S15) . In this case, the VDP system 21 stops the data reproduction (playback) operation or performs the disc determining operation again.

Meanwhile, where the physical mark information recorded in the disc identification area does not correspond to BD-ROM ID information, for example, where information recorded in accordance with a format unique to BD-RE is detected (S20), the VDP system determines the loaded optical disc to be BD-RE.

Thereafter, the VDP system 21 searches the data area assigned to the information area, and then performs a data reproduction operation for reading out data recorded in the data area, and reproducing the read-out data (S21) . Where the data read out in this procedure has a format unique to BD-RE, that is, the read-out data is BD-RE format data (S22), the VDP system 21 determines the loaded optical disc to be a normal BD-RE, and continues the data reproduction (playback) operation (S23).

On the other hand, where the read-out data does not have the format unique to BD-RE, for example, where it is BD-ROM format data other than BD-RE format data, the VDP system 21 determines that BD-ROM data was illegally duplicated on a BD-RE, and then informs of this fact by displaying a report message, while performing a playback restricting operation to forcibly stop the data reproduction operation (S24).

Also, where BD-R ID information is detected from the physical mark information recorded in the disc identification area (S30) , the VDP system 21 determines the loaded optical disc to be BD-R. In this case, the VDP system 21 searches the data area assigned to the information area, and then performs a data reproduction operation for reading out data recorded in the data area, and reproducing the read-out data (S31).

Where it is subsequently determined that the data read out in this procedure has a format unique to BD-ROM, that is, the read-out data is BD-ROM format data (S32), the VDP system 21 determines that BD-ROM data was illegally duplicated on a BD-R, and then informs of this fact by displaying a report message, while performing a playback restricting operation to forcibly stop the data reproduction operation (S33).

On the other hand, where the read-out data does not have the format unique to BD-ROM, for example, where it is BD-RE format data or BD-R format data, the VDP system 21 determines that the loaded optical disc is a normal BD-R, and continues the data reproduction operation (S34).

For reference, where although BD-ROM format data is recorded in the data area of a BD-R disc, separate copyright allowance information is additionally recorded, a normal data reproduction operation can be carried out in accordance with a determination that duplication of data was authorized, based on the copyright allowance information.

As apparent from the above description, the present invention provides a high-density optical disc such as BD-ROM capable of efficiently preventing unauthorized duplication of data streams, written thereon, onto a BD-RE or BD-R, and a method for restricting playback of high-density optical discs duplicated illegally in an optical disc apparatus.

## Claims

1. A recording medium including recorded data, the medium comprising:
an information area for recording disc management information and/or data, the information area including a lead-in area, a data area, and a lead-out area; and
physical mark information recorded as wobbled pits,
**characterized in that**
the physical mark information is recorded in a specific area of the lead-in area not writable by general disc drivers, wherein the wobbled pits are used to record control information for controlling a reproduction of data recorded on the data area and are formed according to a format unique to a type of recording medium, and
disc identification information identifying the type of recording medium is additionally recorded in an area preceding the lead-in area, wherein the type of recording medium is one of ROM, Recordable and Rewritable types.

2. The recording medium according to claim 1, wherein the information recorded in the format represents encryption information used in encrypting data of the data area.

3. The recording medium according to claim 2, wherein the control information further includes copy management information indicating whether duplication of the data is allowed.

4. The recording medium according to claim 3, wherein the physical mark information is recorded as at least one mark/space pair, wherein each mark/space pair includes a mark and a space each having a variable length.

5. The recording medium according to claim 3, wherein the physical mark information is recorded in a permanent information & control data (PIC) area of a Blu-ray Disc Read-Only (BD-ROM) disc where writing is impossible after manufacture of the recording medium.

6. A method of forming a recording medium, comprising:
forming an information area for recording disc management information and/or data; and
forming physical mark information as wobbled pits,
**characterized in that**
the forming step forms the physical mark information in a specific area of a lead-in area of the recording medium, wherein the wobbled pits are used to record control information for controlling a reproduction of data recorded on a data area of the recording medium and formed according to a format unique to a type of recording medium, wherein data recorded the format represents encryption information used in encrypting data of the data area, and
further comprising a step of recording disc identification identifying the type of the recording medium in an area preceding the lead-in area, wherein the type of recording medium is one of ROM, Recordable and Rewritable types.

7. The method of claim 6, wherein the forming step forms the physical mark information on a position of the recording medium being detectable at an initial stage of a servo operation carried out in an optical disc apparatus, separately from a decoding operation to be carried out in the optical disc apparatus.

8. The method of claim 6, wherein the forming step forms the physical mark information as wobbled pits including at least one mark/space pair in a permanent information & control data (PIC) area of the Blu-Ray Disc Read-Only (BD-RO) disc where writing of data is impossible after manufacture of the recording medium, the physical mark information is a Blu-Ray Disc Read-Only Memormy (BD-ROM) identification area (ROMID), and the recording medium is a read-only recording medium.

9. The method of claim 6, further comprising recording copy management information indicating whether duplication of the data is allowed on the recording medium.

10. A method of reproducing data from a recording medium including a lead-in area, a data area and a lead-out area, the method comprising:
reading disc identification additionally recorded in an area preceding the lead-in area for identifying a type of recording medium, wherein the type of recording medium is one of ROM, Recordable and Rewritable types;
detecting physical mark information recorded as wobbled pits in a specific area of the lead-in area not writable by general disc drivers, the wobbled pits being formed according to a format unique to a type of recording medium; and
controlling a reproduction of the recorded data of the data area based on the detected physical mark information.

11. The method of claim 10, wherein the detecting step detects the physical mark information recorded in a permanent information & control data (PIC) area of a Blu-ray Disc Read-Only (BD-ROM) disc where writing is impossible after manufacture of the recording medium.

12. The method of claim 11, wherein the controlling step controls the reproduction by utilizing the detected physical mark information formed according to the format which represents encryption information used in encrypting data of the data area.

13. The method of claim 12, wherein the controlling step further controls a reproduction of a recording medium by utilizing copy management information recorded on the recording medium indicating whether duplication of data is allowed in such a manner that the reproduction is performed if the duplication is allowed.

14. An apparatus for reproducing data from a recording medium (200) including a lead-in area, a data area and a lead-out area, the apparatus comprising:
an optical pickup (20) configured to detect physical mark information recorded as wobbled pits in a specific area of the lead-in area not writable by general disc drivers, the wobbled pits being formed according to a format unique to a type of recording medium, and further to read disc identification additionally recorded in an area preceding the lead-in area for identifying the type of recording medium, wherein the type of recording medium is one of ROM, Recordable and Rewritable types; and
a controller (21) configured to control a reproduction of the recorded data of the data area based on the detected physical mark information.

15. The apparatus of claim 14, wherein the optical pickup (20) is configured to detect the physical mark information recorded in a permanent information & control data (PIC) area of a Blu-ray Disc Read-Only (BD-ROM) disc where writing is impossible after manufacture of the recording medium (200).

16. The apparatus of claim 15, wherein the controller (21) is configured to control the reproduction by utilizing the detected physical mark information formed according to the unique format which represents encryption information used in encrypting data of the data area.

17. The apparatus of claim 16, wherein the controller (21) is configured to control the optical pickup (20) to reproduce data based on copy management information recorded on the recording medium (200), the copy management information indicating whether duplication of data is allowed.

## Patentansprüche

1. Aufzeichnungsmedium, das aufgezeichnete Daten enthält, wobei das Medium Folgendes umfasst:
einen Informationsbereich zum Aufzeichnen von Diskverwaltungsinformationen und/oder -daten, wobei der Informationsbereich einen Lead-in-Bereich, einen Datenbereich und einen Lead-out-Bereich enthält; und
Informationen über physische Markierungen, die als gewobbelte Pits aufgezeichnet sind,
**dadurch gekennzeichnet, dass**
die Informationen über physische Markierungen in einem bestimmten Bereich des Lead-in-Bereichs aufgezeichnet sind, der nicht durch allgemeine Disk-Treiber beschrieben werden kann, wobei die gewobbelten Pits dafür verwendet werden, Steuerungsinformationen aufzuzeichnen, um eine Wiedergabe von Daten zu steuern, die in dem Datenbereich aufgezeichnet sind, und gemäß einem Format ausgebildet sind, das für einen Typ eines Aufzeichnungsmediums kennzeichnend ist, und
zusätzlich Diskidentifizierungsinformationen, die den Typ des Aufzeichnungsmediums identifizieren, in einem Bereich aufgezeichnet sind, der dem Lead-in-Bereich vorausgeht, wobei es sich bei dem Typ des Aufzeichnungsmediums um ein ROM, eine einmal beschreibbare Disk oder um eine wiederbeschreibbare Disk handelt.

2. Aufzeichnungsmedium gemäß Anspruch 1, wobei die in dem Format aufgezeichneten Informationen Verschlüsselungsinformationen darstellen, die zum Verschlüsseln von Daten des Datenbereichs verwendet werden.

3. Aufzeichnungsmedium gemäß Anspruch 2, wobei die Steuerungsinformationen des Weiteren Kopierverwaltungsinformationen enthalten, die anzeigen, ob eine Duplizierung der Daten statthaft ist.

4. Aufzeichnungsmedium gemäß Anspruch 3, wobei die Informationen über physische Markierungen mindestens als ein Markierung/Leerraum-Paar aufgezeichnet sind, wobei jedes Markierung/Leerraum-Paar eine Markierung und einen Leerraum enthält, die jeweils eine variable Länge aufweisen.

5. Aufzeichnungsmedium gemäß Anspruch 3, wobei die Informationen über physische Markierungen in einem Permanent Information & Control-Daten (PIC)-Bereich einer Blu-ray Disc Read-Only (BD-ROM)-Disk aufgezeichnet sind, wobei ein Beschreiben nach der Herstellung des Aufzeichnungsmediums unmöglich ist.

6. Verfahren zum Ausbilden eines Aufzeichnungsmediums, wobei das Verfahren Folgendes umfasst:
Ausbilden eines Informationsbereichs zum Aufzeichnen von Diskverwaltungsinformationen und/oder -daten; und
Ausbilden von Informationen über physische Markierungen als gewobbelte Pits,
**dadurch gekennzeichnet, dass**
der Schritt des Ausbildens die Informationen über physische Markierungen in einem bestimmten Bereich eines Lead-in-Bereichs des Aufzeichnungsmediums ausbildet, wobei die gewobbelten Pits dafür verwendet werden, Steuerungsinformationen aufzuzeichnen, um eine Wiedergabe von Daten zu steuern, die in einem Datenbereich des Aufzeichnungsmediums aufgezeichnet sind, und gemäß einem Format ausgebildet sind, das für einen Typ eines Aufzeichnungsmediums kennzeichnend ist, wobei Daten, die in dem Format aufgezeichnet sind, Verschlüsselungsinformationen darstellen, die beim Verschlüsseln von Daten des Datenbereichs verwendet werden, und
des Weiteren den Schritt umfasst, eine Diskidentifizierung, die den Typ des Aufzeichnungsmediums identifiziert, in einem Bereich aufzuzeichnen, der dem Lead-in-Bereich vorangeht, wobei es sich bei dem Typ des Aufzeichnungsmediums um ein ROM, eine einmal beschreibbare Disk oder um eine wiederbeschreibbare Disk handelt.

7. Verfahren gemäß Anspruch 6, wobei der Schritt des Ausbildens die Informationen über physische Markierungen an einer Position des Aufzeichnungsmediums ausbildet, die in einer Anfangsphase einer Servooperation detektiert werden kann, die in einer Vorrichtung für optische Disks separat von einer Decodieroperation ausgeführt wird, die in der Vorrichtung für optische Disks auszuführen ist.

8. Verfahren gemäß Anspruch 6, wobei der Schritt des Ausbildens die Informationen über physische Markierungen als gewobbelte Pits ausbildet, die mindestens ein Markierung/Leerraum-Paar in einem Permanent Information & Control-Daten (PIC)-Bereich der Blu-Ray Disk Read-Only (BD-RO)-Disk enthalten, wobei ein Schreiben von Daten nach der Herstellung des Aufzeichnungsmediums unmöglich ist, wobei die Informationen über physische Markierungen ein Blu-Ray Disk Read-only Memory (BD-ROM)-Identifikationsbereich (ROMID) sind und das Aufzeichnungsmedium ein Nur-Lese-Aufzeichnungsmedium ist.

9. Verfahren gemäß Anspruch 6, das des Weiteren umfasst, Kopierverwaltungsinformationen aufzuzeichnen, die anzeigen, ob eine Duplizierung der Daten auf dem Aufzeichnungsmedium statthaft ist.

10. Verfahren zum Wiedergeben von Daten von einem Aufzeichnungsmedium, das einen Lead-in-Bereich, einen Datenbereich und einen Lead-out-Bereich enthält, wobei das Verfahren Folgendes umfasst:
Lesen einer Diskidentifizierung, die zusätzlich in einem Bereich aufgezeichnet sind, der dem Lead-in-Bereich vorangeht, zum Identifizieren eines Typs des Aufzeichnungsmediums, wobei es sich bei dem Typ des Aufzeichnungsmediums um ein ROM, eine einmal beschreibbare Disk oder um eine wiederbeschreibbare Disk handelt;
Detektieren von Informationen über physische Markierungen, die als gewobbelte Pits in einem bestimmten Bereich des Lead-in-Bereichs aufgezeichnet sind, der nicht durch allgemeine Disk-Treiber beschrieben werden kann, wobei die gewobbelten Pits gemäß einem Format ausgebildet werden, das für einen Typ des Aufzeichnungsmediums kennzeichnend ist; und
Steuern einer Wiedergabe der aufgezeichneten Daten des Datenbereichs anhand der detektierten Informationen über physische Markierungen.

11. Verfahren gemäß Anspruch 10, wobei der Schritt des Detektierens die Informationen über physische Markierungen, die in einem Permanent Information & Control Daten (PIC)-Bereich eines Blu-ray Disk Read-Only (BD-ROM)-Disk aufgezeichnet sind, wo ein Beschreiben nach der Herstellung des Aufzeichnungsmediums unmöglich ist, detektiert.

12. Verfahren gemäß Anspruch 11, wobei der Schritt des Steuerns die Wiedergabe unter Nutzung der detektierten Informationen über physische Markierungen steuert, die gemäß dem Format ausgebildet sind, das Verschlüsselungsinformationen darstellt, die beim Verschlüsseln von Daten des Datenbereichs verwendet werden.

13. Verfahren gemäß Anspruch 12, wobei der Schritt des Steuerns des Weiteren eine Wiedergabe eines Aufzeichnungsmediums unter Nutzung von Kopierverwaltungsinformationen, die auf dem Aufzeichnungsmedium aufgezeichnet sind und anzeigen, ob eine Duplizierung von Daten statthaft ist, in einer solchen Weise steuert, dass die Wiedergabe ausgeführt wird, wenn die Duplizierung statthaft ist.

14. Vorrichtung zum Wiedergeben von Daten von einem Aufzeichnungsmedium (200), das einen Lead-in-Bereich, einen Datenbereich und einen Lead-out-Bereich enthält, wobei die Vorrichtung Folgendes umfasst:
einen optischen Lesekopf (20), der dafür konfiguriert ist, Informationen über physische Markierungen zu detektieren, die als gewobbelte Pits in einem bestimmten Bereich des Lead-in-Bereichs aufgezeichnet sind, der nicht durch allgemeine Disk-Treiber beschrieben werden kann, wobei die gewobbelten Pits gemäß einem Format ausgebildet sind, das für einen Typ des Aufzeichnungsmediums kennzeichnend ist, und des Weiteren dafür konfiguriert ist, eine Diskidentifizierung zu lesen, die zusätzlich in einem Bereich aufgezeichnet ist, der dem Lead-in-Bereich vorangeht, um den Typ des Aufzeichnungsmediums zu identifizieren, wobei es sich bei dem Typ des Aufzeichnungsmediums um ein ROM, eine einmal beschreibbare Disk oder um eine wiederbeschreibbare Disk handelt; und
eine Steuereinheit (21), die dafür konfiguriert ist, eine Wiedergabe der aufgezeichneten Daten des Datenbereichs anhand der detektierten Informationen über physische Markierungen zu steuern.

15. Vorrichtung gemäß Anspruch 14, wobei der optische Lesekopf (20) dafür konfiguriert ist, die Informationen über physische Markierungen, die in einem Permanent Information & Control Daten (PIC)-Bereich einer Blu-ray Disk Read-Only (BD-ROM)-Disk aufgezeichnet sind, wo ein Beschreiben nach der Herstellung des Aufzeichnungsmediums (200) unmöglich ist, zu detektieren.

16. Vorrichtung gemäß Anspruch 15, wobei die Steuereinheit (21) dafür konfiguriert ist, die Wiedergabe unter Nutzung der detektierten Informationen über physische Markierungen, die gemäß dem kennzeichnenden Format ausgebildet sind, das Verschlüsselungsinformationen darstellt, die beim Verschlüsseln von Daten des Datenbereichs verwendet werden, zu steuern.

17. Vorrichtung gemäß Anspruch 16, wobei die Steuereinheit (21) dafür konfiguriert ist, den optischen Lesekopf (20) zu veranlassen, Daten anhand von Kopierverwaltungsinformationen wiederzugeben, die auf dem Aufzeichnungsmedium (200) aufgezeichnet sind, wobei die Kopierverwaltungsinformationen anzeigen, ob eine Duplizierung von Daten statthaft ist.

## Revendications

1. Support d'enregistrement comportant des données enregistrées, le support comprenant :
une zone d'informations pour enregistrer des informations de gestion de disque et/ou des données, la zone d'information comprenant une zone d'entrée, une zone de données et une zone de sortie ; et
des informations de marquage physique enregistrées en tant que creux ondulés,
**caractérisé en ce que**
les informations de marquage physique sont enregistrées dans une zone spécifique de la zone d'entrée non inscriptible par des pilotes de disque génériques, dans lequel les creux ondulés sont utilisés pour enregistrer des informations de commande pour commander une reproduction de données enregistrées dans la zone de données et sont formés selon un format unique pour un type de support d'enregistrement, et
des informations d'identification de disque identifiant le type de support d'enregistrement sont enregistrées en plus dans une zone précédant la zone d'entrée, dans lequel le type de support d'enregistrement est un parmi des types à lecture seule, enregistrable et réinscriptible.

2. Support d'enregistrement selon la revendication 1, dans lequel les informations enregistrées dans le format représentent des informations de chiffrement utilisées dans le chiffrement de données de la zone de données.

3. Support d'enregistrement selon la revendication 2, dans lequel les informations de commande comprennent en outre des informations de gestion de copie indiquant si la duplication des données est autorisée.

4. Support d'enregistrement selon la revendication 3, dans lequel les informations de marquage physique sont enregistrées comme au moins une paire marque/espace, dans lequel chaque paire marque/espace comprend une marque et un espace ayant chacun une longueur variable.

5. Support d'enregistrement selon la revendication 3, dans lequel les informations de marquage physique sont enregistrées dans une zone de domées de commande et d'informations permanentes (PIC) d'un disque à lecture seule de disque Blu-ray (BD-ROM) où l'écriture est impossible après la fabrication du support d' enregistrement.

6. Procédé de formation d'un support d'enregistrement, comprenant :
la formation d'une zone d'informations pour enregistrer des informations de gestion de disque et/ou des données ; et
la formation d'informations de marquage physique en tant que creux ondulés,
**caractérisé en ce que**
l'étape de formation forme des informations de marquage physique dans une zone spécifique d'une zone d'entrée du support d'enregistrement, dans lequel les creux ondulés sont utilisés pour enregistrer des informations de commande pour commander une reproduction de données enregistrées dans une zone de données du support d'enregistrement et formés selon un format unique pour un type de support d'enregistrement, dans lequel des données enregistrées dans le format représentent des informations de chiffrement utilisées dans le chiffrement de données de la zone de données, et
comprenant en outre une étape d'enregistrement d'une identification de disque identifiant le type du support d'enregistrement dans une zone précédant la zone d'entrée, dans lequel le type de support d'enregistrement est un parmi des types à lecture seule, enregistrable et réinscriptible.

7. Procédé selon la revendication 6, dans lequel l'étape de formation forme les informations de marquage physique sur une position du support d'enregistrement qui est détectable à une phase initiale d'une opération d'asservissement exécutée dans un dispositif de disque optique, séparément d'une opération de décodage à exécuter dans le dispositif de disque optique.

8. Procédé selon la revendication 6, dans lequel l'étape de formation forme les informations de marquage physique en tant que creux ondulés comprenant au moins une paire marque/espace dans une zone de données de commande et d'informations permanentes (PIC) du disque à lecture seule de disque Blu-ray (BD-RO) où l'écriture de données est impossible après la fabrication du support d'enregistrement, les informations de marquage physique sont une zone d'identification (ROMID) de mémoire à lecture seule de disque Blu-ray (BD-ROM) et le support d'enregistrement est un support d'enregistrement à lecture seule.

9. Procédé selon la revendication 6, comprenant en outre l'enregistrement d'informations de gestion de copie indiquant si la duplication des données est autorisée sur le support d'enregistrement.

10. Procédé de reproduction de données à partir d'un support d'enregistrement comprenant une zone d'entrée, une zone de données et une zone de sortie, le procédé comprenant :
la lecture d'une identification de disque enregistrée en plus dans une zone précédant la zone d'entrée pour identifier un type de support d'enregistrement, dans lequel le type de support d'enregistrement est un parmi des types à lecture seule, enregistrable et réinscriptible ;
la détection d'informations de marquage physique enregistrées en tant que creux ondulés dans une zone spécifique de la zone d'entrée non inscriptible par des pilotes de disque génériques, les creux ondulés étant formés selon un format unique pour un type de support d'enregistrement ; et
la commande d'une reproduction des données enregistrées de la zone de données sur la base des informations de marquage physique détectées.

11. Procédé selon la revendication 10, dans lequel l'étape de détection détecte les informations de marquage physique enregistrées dans une zone de données de commande et d'informations permanentes (PIC) d'un disque à lecture seule de disque Blu-ray (BD-ROM) où l'écriture est impossible après la fabrication du support d'enregistrement.

12. Procédé selon la revendication 11, dans lequel l'étape de commande commande la reproduction en utilisant les informations de marquage physique détectées formées selon le format qui représente des informations de chiffrement utilisées dans le chiffrement de données de la zone de données.

13. Procédé selon la revendication 12, dans lequel l'étape de commande commande en outre une reproduction d'un support d'enregistrement en utilisant des informations de gestion de copie enregistrées sur le support d'enregistrement indiquant si la duplication de données est autorisée de manière que la reproduction soit effectuée si la duplication est autorisée.

14. Dispositif pour reproduire des données à partir d'un support d'enregistrement (200) comprenant une zone d'entrée, une zone de données et une zone de sortie, le dispositif comprenant :
une tête de lecture optique (20) configurée pour détecter des informations de marquage physique enregistrées en tant que creux ondulés dans une zone spécifique de la zone d'entrée non inscriptible par des pilotes de disque génériques, les creux ondulés étant formés selon un format unique pour un type de support d'enregistrement, et en outre pour lire une identification de disque enregistrée en plus dans une zone précédant la zone d'entrée pour identifier le type de support d'enregistrement, dans lequel le type de support d'enregistrement est un parmi des types à lecture seule, enregistrable et réinscriptible ; et
un dispositif de commande (21) configuré pour commander une reproduction des données enregistrées de la zone de données sur la base des informations de marquage physique détectées.

15. Dispositif selon la revendication 14, dans lequel la tête de lecture optique (20) est configurée pour détecter les informations de marquage physique enregistrées dans une zone de données de commande et d'informations permanentes (PIC) d'un disque à lecture seule de disque Blu-ray (BD-ROM) où l'écriture est impossible après la fabrication du support d'enregistrement (200).

16. Dispositif selon la revendication 15, dans lequel le dispositif de commande (21) est configuré pour commander la reproduction en utilisant les informations de marquage physique détectées formées selon le format unique qui représente des informations de chiffrement utilisées dans le chiffrement de données de la zone de données.

17. Dispositif selon la revendication 16, dans lequel le dispositif de commande (21) est configuré pour commander la tête de lecture optique (20) pour reproduire des données sur la base d'informations de gestion de copie enregistrées sur le support d'enregistrement (200), les informations de gestion de copie indiquant si la duplication de données est autorisée.
